Europäisches Patentamt

European Patent Office

Office européen des brevets

(11) Numéro de publication : **0 506 514 A1**

# (12) DEMANDE DE BREVET EUROPEEN

(21) Numéro de dépôt : **92400704.0**

(22) Date de dépôt : **17.03.92**

(51) Int. Cl.⁵ : **B60J 5/10**

(30) Priorité : **19.03.91 FR 9103298**

(43) Date de publication de la demande :
**30.09.92 Bulletin 92/40**

(84) Etats contractants désignés :
**DE ES GB IT**

(71) Demandeur : **REGIE NATIONALE DES USINES RENAULT S.A.**
**34, Quai du Point du Jour**
**F-92109 Boulogne Billancourt Cédex (FR)**

(72) Inventeur : **Bascou, Jacques**
**15, rue de la Fontaine Pleureuse**
**F-78580 Bazemont (FR)**
Inventeur : **Plat, Claude**
**14, rue Chauvelot**
**F-92240 Malakoff (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(54) **Dispositif de verrouillage et d'équilibrage d'un hayon de véhicule automobile.**

(57)   Hayon de véhicule automobile articulé sur le bord d'une ouverture formée à l'arrière de la carrosserie du véhicule, constitué par un cadre (5) articulé, un vitrage (22) solidaire dudit cadre et un module (25) rapporté porteur de mécanismes (28, 29) et d'organes, caractérisé par le fait qu'une portion du cadre et un bord (23) du vitrage délimitent une ouverture (24) d'encastrement du module (25) et que les bords (40') de ce dernier portent des moyens de liaison (41) avec les parties adjacentes du cadre.

FIG.2

EP 0 506 514 A1

L'invention concerne un hayon de véhicule automobile articulé sur le bord d'une ouverture formée à l'arrière de la carrosserie des véhicules.

L'invention concerne plus particulièrement un hayon constitué par un cadre support, un vitrage solidaire dudit cadre un module rapporté porteur de mécanismes et d'organes.

La publication FR-A-2 455 998 décrit un hayon en verre pour véhicules qui est relativement lourd car il doit être assez épais pour obtenir une raideur suffisante. Il devra porter également dans ses différentes configurations un certain nombre de mécanismes notamment la serrure de fermeture, l'essuie-vitre et le système d'équilibrage et de contrôle de l'ouverture et de la fermeture du hayon. Le montage et l'ajustage de ces mécanismes nécessitent des manipulations qui augmentent les risques de bris et de rayures du hayon.

La publication FR-A-2 548 600 décrit un hayon composite dont la partie inférieure porte optionnellement ou en série divers mécanismes tels qu'une serrure ou le moteur d'essuie-glace pour être fixée à une partie supérieure transparente.

Le montage de la partie inférieure nécessite l'élaboration de parties fonctionnelles incompatibles avec l'emploi des matériaux conventionnels.

L'invention se propose de remédier aux inconvénients précités et a pour objet une structure additionnelle support d'équipements et de composants dans le but de faciliter la réalisation de variantes de forme et d'équipements sans modification de la structure du hayon.

Selon l'invention une portion du cadre et du bord du vitrage délimitent une ouverture d'encastrement du module porteur de mécanismes et d'organes et les bords de ce dernier portent des moyens de liaison avec les parties adjacentes du cadre.

L'invention sera mieux comprise par la description d'un exemple de réalisation du hayon en référence au dessin annexé sur lequel:

– la figure 1 est une vue arrière d'un véhicule automobile équipé d'un hayon selon l'invention,

– la figure 2 est une vue en perspective éclatée montrant les éléments constitutifs du hayon,

– la figure 3 est une vue en perspective de la structure additionnelle,

– les figures 4, 5, 6 sont des sections caractéristiques de la structure représentée à la figure 3 définies par les plans 4 - 5 - 6 avec les parties attenantes du hayon.

– la figure 7 est une section caractéristique de la partie supérieure du hayon assemblé définie par un plan de coupe de l'articulation.

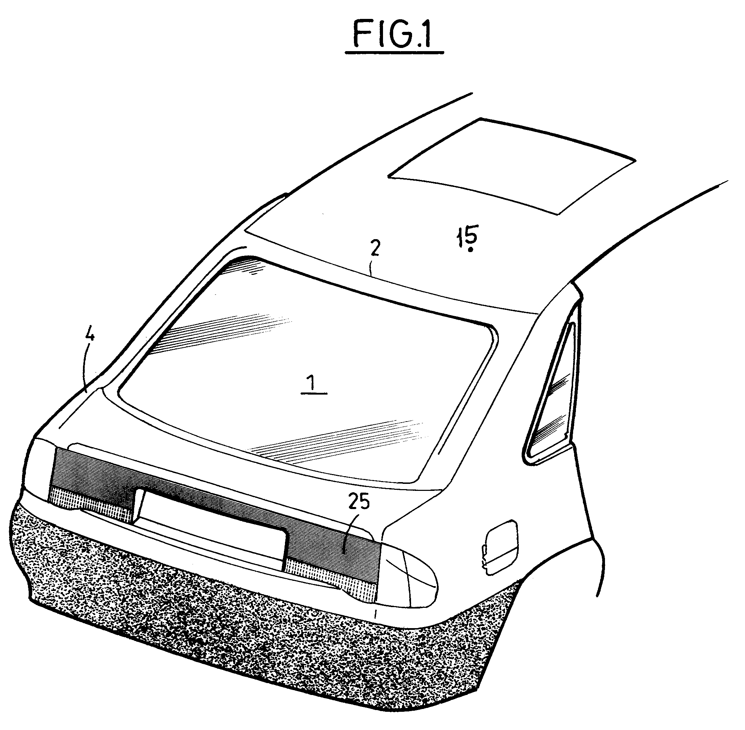

La figure 1 est une vue de face de la partie arrière d'une carrosserie de véhicule du type tronqué qui présente une ouverture d'accès au compartiment à bagages. Le bord supérieur 2 de l'ouverture porte l'axe d'articulation du hayon 4 et celui-ci recouvre le bord inférieur de l'ouverture 1.

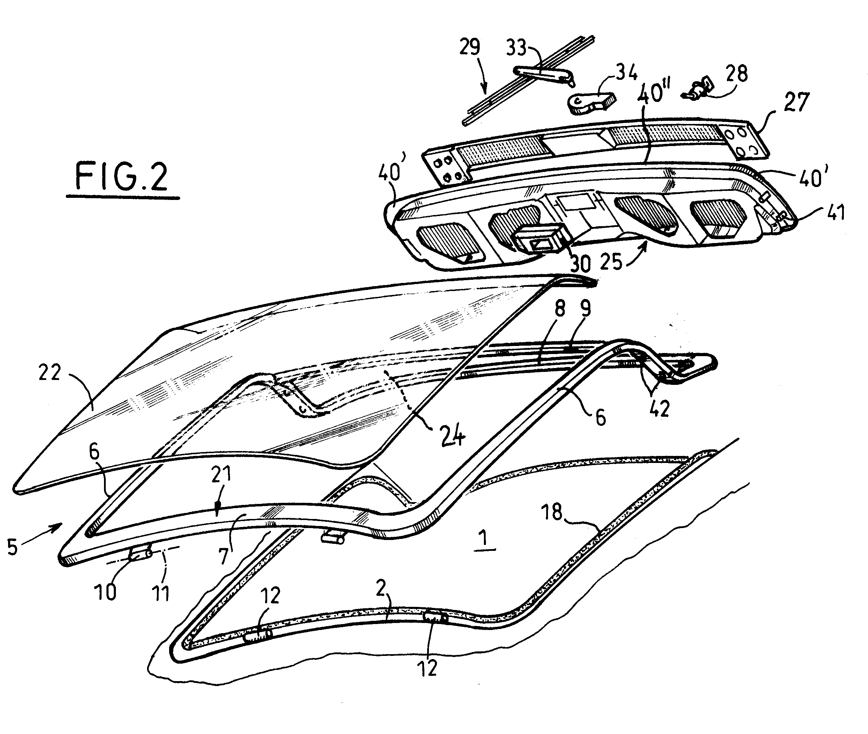

La figure 2 illustre les divers composants du hayon 4. Celui-ci est constitué par un cadre fermé 5 portant deux montants 6, une traverse supérieure 7, une traverse inférieure 8 et une traverse intermédiaire 9 dont les sections sont notamment conformées à la réception d'un vitrage collé.

La traverse supérieure 7 du cadre porte ainsi que cela est bien connu deux charnons mobiles 10 soudés et prépositionnés dont l'axe 11 assure l'articulation du cadre 5 sur des charnons fixes 12 montés sur une tôle de renforcement 14 du bord postérieur 2 du pavillon 15. Les charnons fixes 12 sont fixés à la tôle 14 au moyen de boulons 16 de sorte que l'ensemble de l'articulation constitué par les charnons 10, 12 et les axes 11 soit préassemblé avec le cadre 5 dans le but de faciliter le montage du hayon sur la carrosserie.

La face inférieure du profil constitutif de la traverse supérieure 7, des montants latéraux 6 et de la traverse inférieure 8 du cadre 5 est en appui sur un profil d'étanchéité 18 porté par le bord 20 de l'ouverture 1 le long duquel sont réalisées ainsi que cela est bien connu les liaisons des diverses tôles de doublage avec les panneaux de la carrosserie.

La face supérieure du profil constitutif de la traverse supérieure 7 et des montants latéraux 6 et de la traverse intermédiaire 9 porte la surface de collage 21 d'un vitrage 22.

Le bord inférieur 23 du vitrage recouvre la traverse intermédiaire 9 et délimite avec la traverse inférieure 8 et les portions correspondantes des montants 6 une ouverture 24 d'encastrement par la partie arrière d'un module 25 porteur de mécanismes et d'organes.

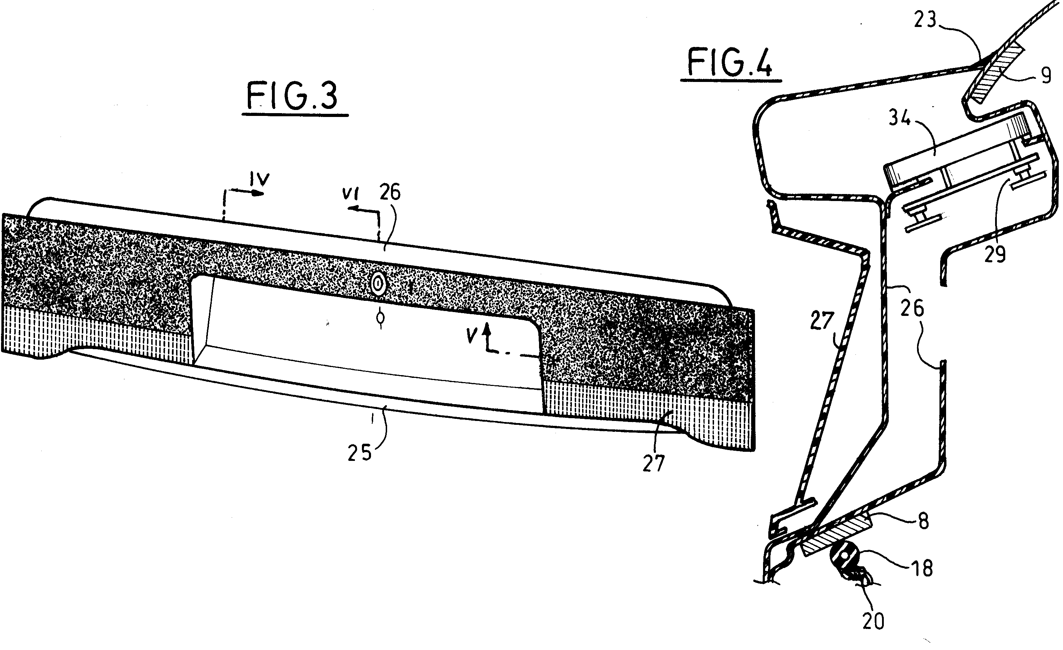

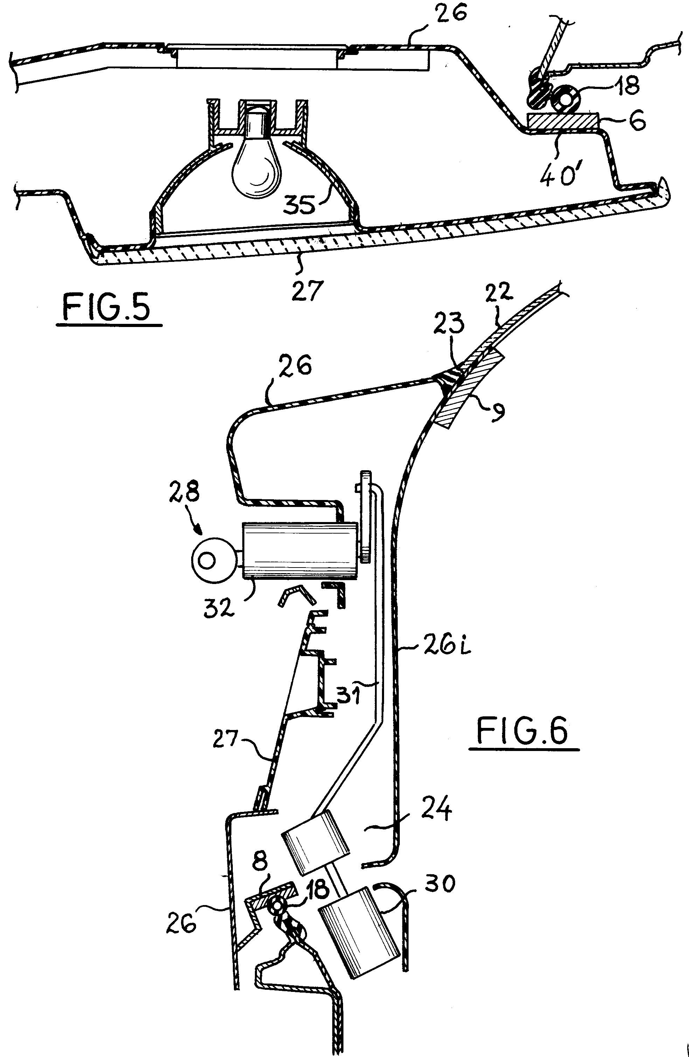

Ainsi que cela est montré aux figures 3 à 6 le module 25 est une structure assemblée constituée essentiellement par un premier élément arrière 26 support des mécanismes et organes et par une paroi de façade extérieure 27 en partie translucide.

L'élément 26 porte notamment :

– le mécanisme 28 de commande d'ouverture du hayon incluant le verrou 30, la tringlerie 31 et l'organe de manoeuvre 32,

– le mécanisme 29 essuie-vitre incluant, notamment le bras d'essuyage 33, le moteur de commande 34,

– la plaque minéralogique,

– les organes d'éclairage 35 de la plaque minéralogique des feux de recul.

Les mécanismes et organes sont montés au travers d'ouvertures portées par la face intérieure 26i de l'élément 26.

La paroi 27 recouvre une partie de l'élément 26 et est solidarisée à celui-ci par tout moyen connu.

Selon une caractéristique du module 25 la face interne de celui-ci possède des bords de fixation et d'appui 40′, 40″.

A cet effet les bords latéraux 40′ portent des tiges de liaison 41 engagées dans les perçages 42 prévus sur la partie inférieure des montants 6 du cadre.

Les bords longitudinaux 40″ et latéraux 40′ peuvent posséder au besoin une rainure de montage d'un joint d'étanchéité périphérique destiné à venir en appui sur les parties adjacentes du cadre 5 et plus particulièrement sur la traverse inférieure 8 et les portions attenantes des montants 6 afin de masquer l'ouverture 24 d'encastrement du module 25.

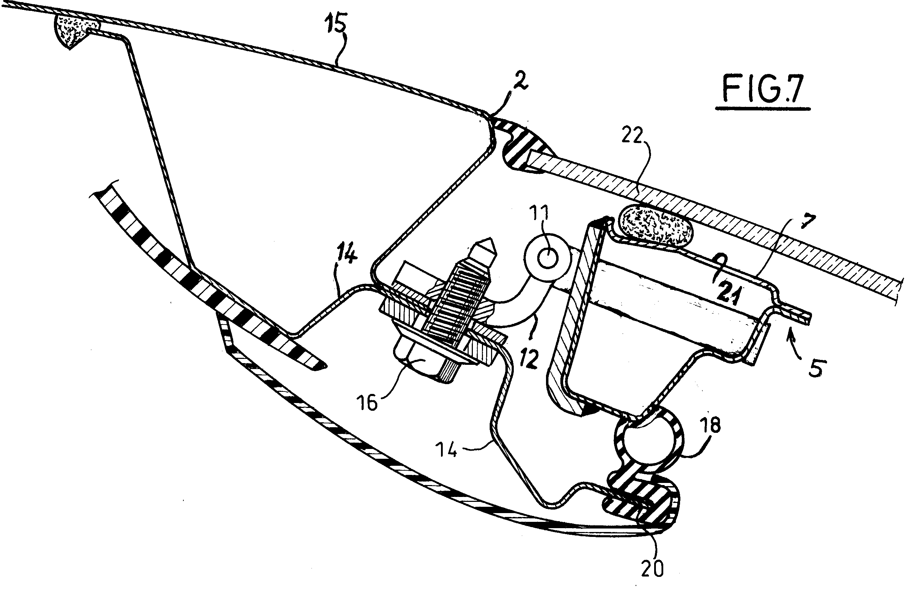

Sans sortir du cadre de l'invention, le cadre 5 pourra être construit à partir de profils de tôle assemblés et soudés dont un exemple de réalisation est représenté à la figure 7.

## Revendications

**1°** Hayon de véhicule automobile articulé sur le bord d'une ouverture formée à l'arrière de la carrosserie du véhicule, constitué par un cadre (5) articulé, un vitrage (22) solidaire dudit cadre et un module (25) rapporté , porteur de mécanismes (28, 29) et d'organes, dont les bords (40′) portent des moyens de liaison (41) avec les parties adjacentes dudit cadre (5) , caractérisé par le fait que la traverse inférieure (8) du cadre et le bord inférieur (23) du vitrage (22) délimitent une ouverture (24) d'encastrement du module (25).

**2°** Hayon selon la revendication 1, caractérisé par le fait que le module (25) est formé par une structure constituée par un premier élément (26) support des mécanismes (28, 29) et organes (35) et par une paroi extérieure (27) en partie translucide.

**3°** Hayon selon la revendication 2, caractérisé par le fait que le premier élément (26) possède des ouvertures de montage des mécanismes et organes et un bord (40) périphérique de recouvrement des bords correspondants de l'ouverture (24) d'encastrement du module (25).

# FIG.1

FIG.2

FIG.4

FIG.3

FIG.5

FIG.6

FIG.7

EP 0 506 514 A1

EP 0 506 514 A1

Office européen
des brevets

**RAPPORT DE RECHERCHE EUROPEENNE**

Numero de la demande

EP 92 40 0704

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 111 457 (FIAT)<br>* page 2, ligne 22 - ligne 30 *<br>* page 5, ligne 6 - ligne 14 *<br>--- | 1 | B60J5/10 |
| X | EP-A-0 120 763 (CITROEN)<br>* page 6, ligne 11 - ligne 26 *<br>--- | 1 | |
| A | US-A-4 773 700 (SANNOMIYA)<br>* colonne 3, ligne 33 - ligne 59 *<br>--- | 1 | |
| A | US-A-4 877 657 (YAVER)<br>* abrégé; figure 4 *<br><br>----- | | |

| | | | DOMAINES TECHNIQUES RECHERCHES (Int. Cl.5) |
|---|---|---|---|
| | | | B60J |

Le présent rapport a été établi pour toutes les revendications

| Lieu de la recherche | Date d'achèvement de la recherche | Examinateur |
|---|---|---|
| LA HAYE | 14 JUILLET 1992 | FOGLIA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9